# EUROPÄISCHE PATENTSCHRIFT

(11) **EP 2 576 183 B1**
(45) Veröffentlichungstag und Bekanntmachung des Hinweises auf die Patenterteilung: **04.06.2014**
(21) Anmeldenummer: 11734011.7
(22) Anmeldetag: 08.07.2011
(51) Int. Cl.: B29C 51/00, B29C 51/08, B29C 51/14, B32B 5/02, B32B 27/00

(54) **VORMATERIAL FÜR EIN FLACHGEWÖLBTES KUNSTSTOFF-FORMTEIL, INSBESONDERE GEHÄUSETEIL, UND DARAUS ERSTELLTES FORMTEIL**
STARTING MATERIAL FOR A FLAT-DOMED MOLDED PLASTIC PART, IN PARTICULAR A HOUSING PART, AND MOLDED PART CREATED THEREFROM
MATÉRIAU PRÉCURSEUR POUR UNE PIÈCE MOULÉE EN PLASTIQUE ELLIPSOÏDALE, NOTAMMENT UNE PARTIE DE BOÎTIER, ET PIÈCE MOULÉE FABRIQUÉE À PARTIR DE CELUI-CI

(30) Priorität: 25.08.2010 DE 102010035438
(43) Veröffentlichungstag der Anmeldung: 10.04.2013
(73) Patentinhaber: Oechsler Aktiengesellschaft, 91522 Ansbach (DE)
(72) Erfinder: OPPERMANN, Michael, 91522 Ansbach (DE); SCHMIDT, André, 91522 Ansbach (DE)
(74) Vertreter: Führing, Dieter
(86) Internationale Anmeldenummer: PCT/EP2011/003424
(87) Internationale Veröffentlichungsnummer: WO 2012/025169

(56) Entgegenhaltungen:
- EP-A1- 1 157 799
- DE-A1-102004 053 131
- US-A1- 2006 240 235

## Beschreibung

Die Erfindung betrifft ein dünnwandiges flachgewölbtes Formteil, insbesondere Gehäuseteil für mobile elektronische Geräte.

Aus der EP 1 157 799 A1 ist ein Mobiltelefon bekannt, dessen rückwärtige Gehäuseschale aus einer Kunststoff-Folie als Basisschicht besteht, auf die eine Leder- oder eine sonstige "futuristische" Dekorlage aufgebracht ist. Dieser Verbund wird tiefgezogen und abschließend zu seiner mechanischen Stabilisierung in einer Spritzgussform mit Kunststoff hinterspritzt, was bei hohem Aufwand an Fertigungseinrichtungen nur eine relativ dickwandige Gehäuseschale von vergleichsweise geringer mechanischer Stabilität ergibt.

Der Markt verlangt aber nach immer flacheren mobilen Geräten wie Musikspeichern, Kleincomputern oder Netzzugangseinrichtungen und dergleichen Consumer Electronics, und insbesondere auch bei den mobilen Telefonen. Dementsprechend schrumpft auch die Höhe dreidimensionaler Gehäuseteile wie die des Batteriedeckels. Der wird gewöhnlich als Mehrfachnutzen in einer Kunststoff-Spritzgussform aus thermoplastischem Material erstellt. Aus spritzgusstechnologischen Gründen, und wegen Mindestanforderungen hinsichtlich Biege- und Verwindungssteifigkeit zur mechanischen Stabilisierung des Gehäuses, kann die Wandungsstärke eines derartigen, separat zu handhabenden, vergleichsweise großflächigen Gehäuseteiles nicht beliebig verringert werden. Derzeit wird etwa 1,5 mm Wandungsstärke beim thermoplastischen Formteil als Minimum betrachtet. Die resultierende Wandstärke erhöht sich aber um ca. 0,4 mm auf typisch 1,9 mm, wenn auf die Außenfläche des Spritzguss-Gehäuseteiles aus optischen oder haptischen Gründen eine Dekorlage - etwa eine Ledernoppen imitierende Kunststofffolie - appliziert wird, die dann üblicherweise noch, schon zur Kantenanbindung, mit einer glasklaren thermoplastischen Schutzschicht überzogen wird. Mit der Forderung nach solch marktgerechter Ausstattung höherwertiger Konsumprodukte wird das spritzgusstechnische Bemühen um dünnwandige Kunststoff-Formteile geradezu konterkariert.

In Erkenntnis solcher Gegebenheiten liegt vorliegender Erfindung die technische Problemstellung zugrunde, Formteile gattungsgemäßer Art trotz Dekorbeschichtung insgesamt noch dünnwandiger auszulegen.

Das ist über den Weg einer zur mechanischen Stabilisierung hinterspritzten Basisfolie nach der oben erörterten EP 1 157 799 A 1 nicht zu erreichen.

Das angestrebte, extrem dünne und nur flach gewölbte Formteil ist auch nicht erzielbar, wenn gemäß der DE 10 2004 053 131 A1 ein flächiges Faserverbund-Halbzeug im Zuge seines Formpressens etwa zu einem Kraftfahrzeug-Armaturenbrett, vorzugsweise unter Zwischenlage einer Schutzfolie, mit einer Dekorschicht verbunden wird. Das Halbzeug soll gute Tiefzieheigenschaften aufweisen, wenn es zu etwa je einem Gewichts-Drittel aus thermoplastischen Langfasern, aus Naturstoff-Langfasern (wie Flachs) und aus einer Kurzfaser-Holzkomponente (etwa in Form von Holzmehl) besteht. Die Fasern werden zu einer Vliesstruktur verwirbelt, die vor ihrer Umformung noch durch Vernadeln verfestigt wird. Beim Umformen schmelzen die Kunststoff-Fasern, um einerseits die Naturfasern in das Holzmehl einzubinden und andererseits die Dekorschicht aufzuschmelzen. Die Kunststoff-Fasern tragen also nicht im Sinne eines Faserverbundwerkstoffes zur mechanischen Beanspruchbarkeit des Formteiles bei. Ein derartiges Vlies aus miteinander verwirbelten, dann vernadelten und schließlich in Holzmehl miteinander verschmolzenen Flachsfasern führt ersichtlich nicht zu einer Optimierung von Vormaterial für extrem dünne und dennoch mechanisch stabile Kunststoff-Formteile.

Bei der US 2003/0240235 A1 handelt es sich darum, an einem Kern aus thermoplastischem Faserverbundwerkstoff einen definierten Bereich zu erzeugen, der als Scharnier für eine Klappenbewegung wirkt, insbesondere für den Austritt eines Airbag aus einer Kraftfahrzeug-Armaturentafel. Dazu wird eine Schicht aus biegsamem und hoch dehnbarem Material von einer Oberfläche her (gegebenenfalls deckungsgleich auch auf der gegenüberliegenden Oberfläche) unter Druck und Wärme dem Kern aufgeprägt und dann der so bestückte Kern mit einer alles überspannenden Dekorschicht versehen, bei der es sich um thermoplastisches Material oder um ein Gewebe handeln kann. Eine möglichst dünnwandige Auslegung spielt dafür keine Rolle und ist dadurch auch nicht erzielbar.

Die vorstehend umrissene Aufgabe dagegen ist durch die im Hauptanspruch angegebenen wesentlichen Merkmale gelöst. Danach wird insbesondere nicht mehr erst ein aus thermoplastischem Material spritzgegossenes Formteil mit der Dekorlage ausgestattet. Sondern solch eine Dekor-Ausstattung erfährt das Formteil, während es aus einem sandwichartig mit einer Kunststoff-Matrix laminierten mehrlagigen Faserverbundwerkstoff als dünnem Träger tiefgezogen wird.

Ein solcher Faserverbundwerkstoff ist als Bahnen- oder Tafelware insbesondere zum Fertigen von Kraftfahrzeug-Karosserieteilen wie Stoßfängern und Reserveradmulden am Markt. Wegen der guten mechanischen Eigenschaften, insbesondere der hohen Biege- und Torsionssteifigkeit des Faserverbundwerkstoffes braucht dieser, bei im Übrigen gleicher Formgebung, nur eine Stärke in der Größenordnung von einem Drittel einer spritzgegossenen Wandstärke aufzuweisen. Der Faserverbundwerkstoff wird mit einer Trägerfolie zum Aufbringen von Klebeband für die Dekorlage bestückt. Selbst mit solcher Applikation der Dekorlage auf eine der beiden Sandwich-Oberflächen weist das resultierende, aus einem Zuschnitt tiefgezogene Umformteil eine geringere Wandstärke als ein vergleichbares, sogar noch undekoriertes, Spritzgussteil auf.

Denn der Faserverbundwerkstoff als die faserverstärkte Grundstruktur misst typischerweise nur ca. 0,5 mm Stärke und kann deshalb mit einer, im Interesse deutlicher haptischer Profilierung, vergleichsweise dicken Dekorlage von z.B. 0,4 mm - zuzüglich je 0,1 mm Stärke von Klebeband und Trägerfolie - ausgestattet werden. Das ergibt eine Gesamtstärke, die bei deutlich verbesserten haptischen Eigenschaften mit 1,1 mm um gleich gut 30% dünner ist, als ein beschichtetes Spritzguss-Formteil vorstehend erörterter Art; und das bei mindestens gleichen mechanischen Eigenschaften etwa hinsichtlich Biege- und Verwindungssteifigkeit des resultierenden Formteiles gleicher Geometrie. Das Umformteil aus solchem Vormaterial ist beispielsweise ein stabiles Gehäuseteil mit dekorativer und haptisch ansprechender Oberfläche (aus z.B. Leder oder Kunstleder) in Dünnwandtechnik.

Vorliegend wird zur Vereinfachung der Darstellung stets nur von faserverstärkenden Geweben im Faserverbundwerkstoff gesprochen, die aber im Rahmen vorliegender Erfindung gleichermaßen ein- oder mehrlagig sowie auch als Gewirke, Gelege, Faserstränge (Rovings), Filze und dergleichen Matten ausgelegt sein können. Stets handelt es sich um, zumeist definiert orientierte, Faserstrukturen, die mit duroplastischer oder, vorzugsweise, mit thermoplastischer Kunststoff-Matrix zum sandwichartigen Faserverbundwerkstoff laminiert sind.

Vor allem bei gesteigerten mechanischen Anforderungen läge es an sich nahe, für das Verstärkungs-Gewebe auf Karbon-Fasern zurückzugreifen. Die weisen nicht nur besonders hohe Festigkeit auf, als Umformteil liefert ihre Gewebestruktur auch bereits eine angenehme Haptik sowie edles Aussehen. Solche Umformteile sind aber wegen der elektrisch leitenden Eigenschaften von Karbon und des daraus resultierenden Abschirmverhaltens nicht bei Geräten einsetzbar, in die z.B., etwa wie bei Mobiltelefonen, eine Funkantenne integriert ist. Dieses Manko ist bei den ebenfalls außerordentlich festen Kevlar- bzw. Aramid-Fasern zwar nicht gegeben, aber infolge deren Bedarfes etwa für Schutzhelme und für schusssichere Westen sind solche Gewebe zu für Konsumgüter vertretbaren Preisen am Markt kaum verfügbar. Deshalb bleibt für die Belange der Praxis zumeist nur der Rückgriff auf Laminate mit den herkömmlichen Glasfaser-Geweben, die, insbesondere mehrlagig, auch sehr gute mechanische Festigkeiten ergeben.

Dieses hier erfindungsgemäß eingesetzte Vormaterial ist also selbst nach der Beschichtung mit der Dekorlage bei mindestens vergleichbaren mechanischen Eigenschaften dünner als das noch unbeschichtete, in herkömmlicher Weise formgespritzte Formteil. Auf die eine der beiden Außenflächen des laminierten Gewebes wird die Dekorlage insbesondere aufgeklebt, je nach der Materialpaarung aber z.B. auch aufgeschweißt. Bei der Dekorschicht kann es sich je nach den apparativen Anforderungen um Echtleder oder um eine Kunststoff-Folie gewünschter Oberflächenstrukturierung handeln, aber auch um eine Textillage und selbst um eine dünne Holz- oder Metallschicht.

Für eine zusätzliche Verringerung der Wandungsstärke kann man sogar in Betracht ziehen, das Verstärkungsgewebe des Faserverbundwerkstoffes regelwidrig nicht beidseitig, sondem unter guter Durchfeuchtung der Gewebestruktur nur einseitig mit der Kunststoffmatrix zu laminieren; woraufhin die Dekorlage in oben beschriebener Weise unmittelbar auf die der Matrix gegenüberliegende, unebene Oberfläche des von Matrixmaterial durchdrungenen Gewebes aufgebracht würde. Solch unsymmetrische Struktur würde allerdings eine Einbuße an Festigkeit erbringen; und es müssten erhebliche fertigungstechnische Komplikationen beherrscht werden, weil das im Wesentlichen nur einseitig laminierte Gewebe sich beim thermischen Umformen verziehen könnte (sog. Bimetall-Effekt). Außerdem ist kritisch, ob dieses praktisch nur einseitig eingebundene Gewebe die Dekorlage hinreichend stabil hält.

Für eine dennoch spürbare weitere Verringerung der Gesamtstärke des Umformteiles ist deshalb erfindungsgemäß vorgesehen, die Dekorlage, ohne die Haftvermittler in Form des Klebestreifens und seiner Trägerfolie, unmittelbar auf eine der beiden Oberflächen des symmetrisch laminierten Faserverbundwerkstoffes im Press- oder Schäumverfahren aufzuschmelzen. Das ergibt, bei u.U. sogar noch verbesserten mechanischen Eigenschaften wegen der zusätzlichen Einbindung der Dekorlage in den Faserverbundwerkstoff, eine Verringerung der Stärke des Umformteiles um weitere ca. 0,2 mm.

Ein Zuschnitt aus dem laminierten und dann einseitig dekorbeschichteten Faserverbundwerkstoff wird vor oder nach dem Einbringen in eine Tiefziehform auf die Glas- oder Erweichungstemperatur der das Fasergewebe aufnehmenden Matrix erwärmt und daraufhin in der Form unmittelbar zum Gehäuseteil oder dergleichen Umformteil tiefgezogen, das dann ohne Nachbearbeitungserfordernisse bereits mit der haptisch oder visuell gewünschten Außenfläche ausgestattet anfällt.

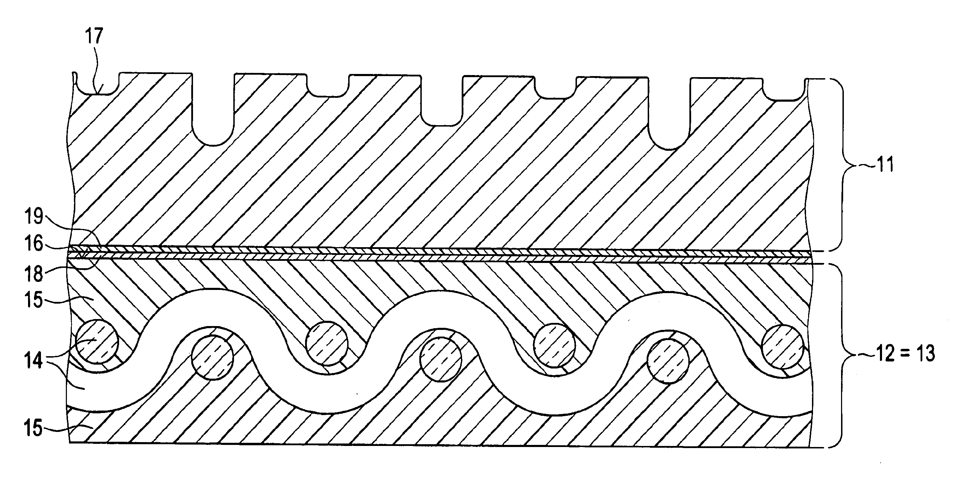

In der einzigen Figur der Zeichnung ist ein erfindungsgemäßes Vormaterial zum Tiefziehen eines flachen aber mechanisch stabilen Kunststoff-Umformteiles mit Dekorlage unmaßstäblich überhöht skizziert.

Bei diesem Realisierungsbeispiel besteht der mit einer relativ dicken Dekorlage 11 (etwa 0,4 mm Kunstleder) kaschierte, mechanisch stabile Träger 12 aus einem Faserverbundwerkstoff 13, dessen hier einlagig leinenförmiges Glasfaser-Gewebe 14 in üblicher Weise beidseitig mit je einer thermoplastischen Matrix 15 laminiert ist. Die auf eine Oberfläche 16 dieses Trägers 12 von typisch 0,5 mm Stärke aufkaschierte Dekorlage 11 kann also im Interesse einer kräftig noppenartig profilierten, dadurch insbesondere auch haptisch sehr ansprechenden Außenfläche 17 wie skizziert durchaus etwa die Stärke des Trägers 12 aufweisen. Die Dekorlage 11 ist bei diesem Ausführungsbeispiel nicht direkt auf eine der Oberflächen 16 des Trägers 12 aufgeklebt, sondern unter Zwischenlage einer Trägerfolie 18 mittels eines Klebebandes 19 (von typisch je 0,1 mm Dicke) auf den Träger 12 aufgebracht.

Damit ergibt sich für das Tiefzieh-Vormaterial insgesamt, wie auch für die Wandstärke des daraus tiefgezogenen Gehäuse- oder dergleichen Umformteiles (nicht gezeichnet), eine Wandungsdicke in der Größenordnung von nur noch gut einem Millimeter.

Da die technologischen Grenzen bei der Verringerung der Wandstärke von im Kunststoff-Spritzguss hergesellten und mit Dekorlagen ausgestatteten flachgewölbten Gehäuseteilen wie Batteriedeckeln mobiler Geräte erreicht zu sein scheinen, wird also erfindungsgemäß zu dennoch sogar signifikanter weiterer Verringerung der resultierenden Wandungsstärke auf ein bahnen- oder tafelförmiges Vormaterial übergegangen, bei dem es sich um einen einseitig mit der Dekorlage 11 ausgestatteten Faserverbundwerkstoff 13 handelt, aus dem das Gehäuseteil im Tiefziehverfahren geformt wird. Selbst bei Aufbringen einer aus haptischen Gründen in ihrer Außenfläche 17 stark genarbten, dicken Dekorlage 11 bleibt die resultierende Wandungsstärke des Umformteiles weit unter derjenigen bei einem im Spritzguss erstellbaren Gehäuseteil. Eine sogar noch weitere Abnahme der Wandungsstärke wird erzielt, wenn als Tiefzieh-Vormaterial für das Umformteil ein Faserverbundwerkstoff 13 eingesetzt wird, auf dessen Oberfläche 16 das Dekormaterial direkt aufgeschäumt oder aufgespritzt ist.

## Patentansprüche

1. Dünnwandiges flachgewölbtes Formteil, insbesondere Gehäuseteil für mobile elektronische Geräte, das einen Zuschnitt aus einem tiefziehfähigen bahnen- oder tafelförmigen, mit Kunststoff-Matrix (15) laminierten, sandwichartig mehrlagigen Faserverbundwerkstoff (13) als Träger (12) für eine aufkaschierte Dekorlage (11) aufweist.

2. Formteil nach Anspruch 1, **dadurch gekennzeichnet, dass** die Dekorlage (11) auf eine der Oberflächen des Faserverbundwerkstoffes (13) aufgebracht ist.

3. Formteil nach einem der vorangehenden Ansprüche, **dadurch gekennzeichnet, dass** die Dekorlage (11) aufgeklebt, aufgeschmolzen oder aufgeschweißt ist.

4. Formteil nach dem Anspruch 1 oder 2, **dadurch gekennzeichnet, dass** die Dekorlage (11) aufgeschäumt oder aufgespritzt ist.

5. Formteil nach einem der Ansprüche 1 oder 2, **dadurch gekennzeichnet, dass** die Dekorlage (11) unter Zwischenlage einer Trägerfolie (18) mittels Klebebandes (19) aufgebracht ist.

6. Formteil nach Anspruch 1, **dadurch gekennzeichnet, dass** der Faserverbundwerkstoff (12) nur einseitig laminiert und die Dekorlage (11) auf die der Kunststoffmatrix (15) gegenüberliegende, unebene Oberfläche von Matrixmaterial durchdrungenen Gewebes (14) aufgebracht ist.

7. Formteil nach einem der vorangehenden Ansprüche, **dadurch gekennzeichnet, dass** die Außenfläche (17) seiner Dekorlage (11) grob genarbt ist.

8. Formteil nach einem der vorangehenden Ansprüche, **gekennzeichnet durch** Echtleder, Kunstleder, Textilien, Holz oder Metall als Material für die Dekorlage (11).

9. Formteil nach einem der vorangehenden Ansprüche, **dadurch gekennzeichnet, dass** es der Batteriedeckel eines mobilen Gerätes ist.

## Claims

1. Thin-walled flat-domed moulded part, in particular a housing part for mobile electronic devices, which comprises a blank of a thermoformable web- or sheet-form, sandwich-like multi-ply fibre composite material laminated with a plastics matrix (15), as a support (12) for a laminated-on decorative layer (11).

2. Moulded part according to Claim 1, **characterized in that** the decorative layer (11) is applied to one of the surfaces of the fibre composite material (13).

3. Moulded part according to one of the preceding claims, **characterized in that** the decorative layer (11) is adhesively bonded, fused or welded on.

4. Moulded part according to Claim 1 or 2, **characterized in that** the decorative layer (11) is foamed or sprayed on.

5. Moulded part according to either of Claims 1 and 2, **characterized in that** the decorative layer (11) is applied with a backing film (18) interposed by means of adhesive tape (19).

6. Moulded part according to Claim 1, **characterized in that** the fibre composite material (12) is laminated on just one side and the decorative layer (11) is applied to the uneven surface, opposite the plastics matrix (15), of the woven fabric (14) penetrated by matrix material.

7. Moulded part according to one of the preceding claims, **characterized in that** the outer surface (17) of its decorative layer (11) is coarsely grained.

8. Moulded part according to one of the preceding claims, **characterized by** real leather, imitation leather, textiles, wood or metal as the material for the decorative layer (11).

9. Moulded part according to one of the preceding claims, **characterized in that** it is the battery cover of a mobile device.

## Revendications

1. Pièce moulée à paroi mince bombée, en particulier pièce de boîtier pour appareils électroniques portables,
la pièce moulée présentant comme support (12) pour une couche décorative (11) qui y est appliquée un flan stratifié multicouche emboutissable en matériau composite fibreux (13), en forme de bande ou de plaque et de type en sandwich, avec une matrice (15) en matière synthétique.

2. Pièce moulée selon la revendication 1, **caractérisée en ce que** la couche décorative (11) est appliquée sur l'une des faces du matériau composite fibreux (13).

3. Pièce moulée selon l'une des revendications précédentes, **caractérisée en ce que** la couche décorative (11) est collée, fondue ou soudée.

4. Pièce moulée selon les revendications 1 ou 2, **caractérisée en ce que** la couche décorative (11) est appliquée par moussage ou projection.

5. Pièce moulée selon les revendications 1 ou 2, **caractérisée en ce que** la couche décorative (11) est appliquée en intercalant une feuille de support (18) au moyen d'un ruban adhésif (19).

6. Pièce moulée selon la revendication 1, **caractérisée en ce que** le matériau composite fibreux (12) n'est stratifié que sur une face et **en ce que** la couche décorative (11) est appliquée sur la surface non plane et opposée à la matrice (15) en matière synthétique d'un tissu (14) imprégné du matériau de matrice.

7. Pièce moulée selon l'une des revendications précédentes, **caractérisée en ce que** la surface extérieure (17) de sa couche décorative (11) est grainée grossièrement.

8. Pièce moulée selon l'une des revendications précédentes, **caractérisée en ce que** le matériau de la couche décorative (11) est un cuir véritable, un cuir synthétique, un textile, du bois ou du métal.

9. Pièce moulée selon l'une des revendications précédentes, **caractérisée en ce qu'**elle forme le couvercle de batterie d'un appareil portable.
